# EUROPÄISCHE PATENTSCHRIFT

(11) **EP 0 677 539 B1**
(45) Veröffentlichungstag und Bekanntmachung des Hinweises auf die Patenterteilung: **09.10.2002**
(21) Anmeldenummer: 95105266.1
(22) Anmeldetag: 07.04.1995
(51) Int. Cl.: C08G 18/08, C08G 18/64, C08G 18/70, C08G 18/80, C09D 175/04, C09D 5/44

(54) **Beschichtungsmittel enthaltend lösungsmittelfrei dispergierbare Härter**
Coatings containing solventless dispersable curing agents
Revêtements contenant des durcisseurs dispersables sans solvant

(30) Priorität: 15.04.1994 DE 4413059
(43) Veröffentlichungstag der Anmeldung: 18.10.1995
(73) Patentinhaber: Solutia Germany GmbH & Co. KG, 55252 Mainz-Kastel (DE)
(72) Erfinder: Schaftheutle, Markus A., Dr., D-65239 Hochheim (DE); Völker, Achim, Dr., D-65197 Wiesbaden (DE); Wehner, Susanne, D-65606 Villmar (DE); Walz, Gerd, Dr., D-65207 Wiesbaden (DE)
(74) Vertreter: Zounek, Nikolai, Dipl.-Ing.

(56) Entgegenhaltungen:
- EP-A- 0 234 395
- EP-A- 0 524 511
- EP-A- 0 551 641
- FR-A- 2 300 147
- US-A- 4 408 008
- US-A- 4 925 885
- US-A- 5 373 050
- CHEMICAL ABSTRACTS, vol. 115, no. 12, 23.September 1991 Columbus, Ohio, US; abstract no. 116510p, MASUDA ET AL 'BLOCKED POLYISOCYANATE DISPERSIONS WITH GOOD STORAGE STABILITY' & JP-A-00 364 309 (TORAY INDUSTRIES)
- JOURNAL 0F APPLIED POLYMER SCIENCE, Bd. 46, Nr. 6, 25.Oktober 1992 NEW YORK, US, Seiten 965-971, XP 000336010 YANG ET AL 'FTIR ANALYSIS OF ELECTRODEPOSITION FILM FROM EMULSION OF TWO CATIONIC RESINS'

## Beschreibung

Die Erfindung betrifft wäßrige Beschichtungsmittel.

Wäßrige Beschichtungsmittel werden zunehmend für alle Aufgaben in der Veredlung von Oberflächen eingesetzt, da der Gehalt an organischen Lösungsmitteln zur Verringerung und Vermeidung von Immissionen immer weiter reduziert werden muß.

Wenn lösungsmittelhaltige Beschichtungssysteme durch lösungsmittelfreie oder lösungsmittelarme Systeme ersetzt werden, müssen die vorteilhaften Anwendungseigenschaften der bisherigen lösungsmittelhaltigen Systeme und deren gute Schutzwirkung erhalten bleiben oder womöglich übertroffen werden.

Zur Herstellung der einzelnen Bindemittelkomponenten müssen aus Viskositätsoder Reaktivitätsgründen häufig Lösungsmittel eingesetzt werden. So werden bei der Synthese der Basisharze vorzugsweise protische (Alkohole, Glykole) und aprotische Lösungsmittel wie Ketone, Ester oder Aromaten und bei der Synthese der Vernetzerkomponente aprotische Lösungsmittel verwendet.

Bekannterweise wird aber mit steigendem Lösungsmittelgehalt beispielsweise in kathodischen Tauchlack-Bädern der Umgriff (Hohlraumbeschichtung) verschlechtert, es treten Überbeschichtungen auf und Lösungsmittel gelangen vermehrt in das Abwasser und/oder die Abluft. Daher müssen die Lösungsmittel den Bindemitteln vor und/oder nach dem Dispergieren in Wasser z.B. durch Destillation oder Ultrafiltration entzogen werden. Dabei verbleibt verfahrensbedingt ein Teil der Lösungsmittel in den Dispersionen und es fallen, besonders beim sogenannten "Strippen" aus wäßriger Phase und beim Ultrafiltrieren größere Mengen eines Lösungsmittel-Wasser-Gemisches an, das entsorgt oder aufgearbeitet werden muß.

Die Vemetzer des Standes der Technik liegen als Lösung in organischen Lösungsmitteln oder als wäßrige Dispersion vor, wobei jedoch ein erheblicher Anteil (in einem typischen Beispiel ca. 30 % der Masse der Dispersion) an Lösungsmitteln in der Dispersion verbleiben muß. Diese Lösungsmittelmenge ist der größte Anteil im fertigen Beschichtungssystem, das z.B. aus Bindemittel, Härter und Pigmentpaste besteht.

Es bestand daher die Aufgabe, Härter für wäßrige Beschichtungsmittel zu entwickeln, die als lösungsmittelfreie wäßrige Dispersion vorliegen und deren Eigenschaften denen der üblichen lösungsmittelhaltigen Systeme zumindest ebenbürtig sind.

Gegenstand der Erfindung sind wäßrige Beschichtungsmittel enthaltend
(A') eine wäßrige Dispersion eines Epoxid-Amin-Addukts (A) mit gegenüber Isocyanat reaktiven funktionellen Gruppen, und
(B') eine wäßrige lösungsmittelfreie Dispersion eines solubilisierten verkappten Isocyanats (B), wobei zu dessen Herstellung eine solubilisierende Verbindung eingesetzt wird, ausgewählt aus der Gruppe (B3-k) der Polyamine mit mindestens einer tertiären und mindestens einer primären oder sekundären Aminogruppe und der Amine mit mindestens einer tertiären und mindestens einer Hydroxy-, primären oder sekundären Amino- und/oder Mercaptogruppe, der Gruppe (B3-a) der Hydroxy-, Mercapto- und Aminosäuren und der Gruppe (B3-n) der organischen Hydroxy-, Mercapto- und Amino-Verbindungen, die ein hydrophiles nichtionisches Strukturelement enthalten, mit der Maßgabe, daß im Fall einer kationischen Solubilisierung des Isocyanats zu dessen Herstellung eines polymeres oder oligomeres Polyisocyanat eingesetzt wird.

Die erfindungsgemäßen Beschichtungsmittel kömmen durch Mischen der Dispersionen (A') und (B') unmittelbar oder kurze Zeit vor dem Gebrauch hergestellt werden. Eine andere Möglichkeit ist das Mischen von Harz (A) und Härter (B) in Lösung oder Schmelze, und anschließendes gemeinsames Dispergieren der Mischung in Wasser.

Zur Herstellung von Dispersionen dieser Harze und dieser Härtungsmittel müssen sie in hydrophile Formen überführt werden. Dies erfolgt beispielsweise durch Einkondensieren von Bausteinen, die hydrophile Gruppen enthalten. Diese hydrophilen Gruppen können kationisch, anionisch oder nichtionisch sein. Beispiele für kationische Gruppen sind Ammonium-, Phosphonium- oder Sulfonium-Gruppen. Tertiäre Amino- und Phosphin-Gruppen oder Sulfid-Gruppen sind selbst nicht kationisch, können aber durch Protonieren mit Säuren vor oder während dem Dispergierungsschritt in kationische Form überführt werden und daher auch hydrophil wirken. Beispiele für anionische Gruppen sind Carboxylat-, Phosphonat-, Phosphinat-, Sulfonat- oder Sulfinatgruppen. Sie können auch aus den entsprechenden (undissoziierten) Säuregruppen durch Basenzusatz vor oder während dem Dispergierungsschritt erzeugt werden. Beispiele für nichtionische hydrophile Gruppen sind Polyoxyalkylengruppen mit niedriger Anzahl von C-Atomen im Alkylenrest wie Polyoxyäthylen oder -propylen, oder polare Gruppen wie Amidgruppen, Aminogruppen, Harnstoffgruppen und Hydroxygruppen, bevorzugt in größerer Zahl in räumlicher Nähe.

Geeignete amin-modifizierte Epoxidharze (A) sind wasserverdünnbare Amino-Epoxidharze und solche Carbonataminaddukte, die in DE 36 44 370 und EP 272 665 beschrieben sind. Solche Amino-Epoxidharze weisen im allgemeinen eine Aminzahl von 30 bis 200 (mg KOH pro g Festharz), eine Hydroxylzahl von 50 bis 500 (mg KOH pro g Festharz) und eine zahlenmittlere Molmasse (Mn) von 250 bis
10000, bevorzugt 300 bis 5000 g/mol auf. Die untere Grenze der Aminzahl sollte bevorzugt 45, besonders bevorzugt 70, die obere Grenze dagegen sollte bevorzugt bei 150, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so bildet sich bei der Abscheidung ein schlecht haftender Film oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidyläther, Polyglycidylester und Polyglycidylamine mit gesättigten und/oder ungesättigten sekundären und/oder primären Aminen bzw. Aminoalkoholen. Diese können durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmäßig aus Polyglycidyläthern mit bevorzugt zwei 1,2-Epoxidgruppen pro Molekül erhalten. Unter Polyglycidyläther im Rahmen dieser Erfindung werden vorzugsweise solche Polyglycidyläther der allgemeinen Formel 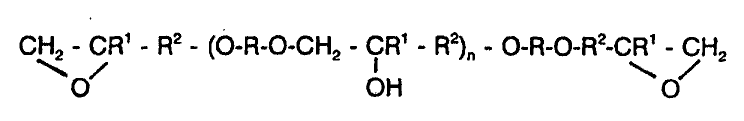 mit 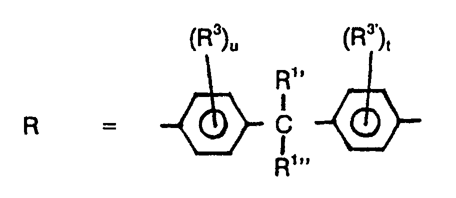 mit
- R¹, R¹', R¹" =: jeweils unabhängig von einander -H oder linearer oder verzweigter gesättigter Alkylrest mit bis zu 8 Kohlenstoffatomen
- R² =: linearer oder verzweigter gesättigter Alkylenrest mit bis zu 8 Kohlenstoffatomen, der gegebenenfalls zusätzlich substituiert sein kann, bevorzugt -CH₂-
- R³, R³' =: jeweils unabhängig von einander -H oder linearer oder verzweigter gesättigter Alkylrest mit bis zu 8 Kohlenstoffatomen, Halogen, bevorzugt -H
- n =: 0 bis 8, bevorzugt 1 bis 6
- m =: 1 bis 8, bevorzugt 1
- t,u =: jeweils unabhängig voneinander 0 bis 4 verstanden.

Diese Polyglycidyläther haben eine zahlenmittlere Molmasse (Mn) von etwa 300 bis 5000 g/mol und eine Molmasse dividiert durch die Anzahl der Epoxygruppen ("Epoxid-Äquivalentgewicht") von etwa 170 bis 2500 g/mol. Beispiele hierfür sind Umsetzungsprodukte von Epichlorhydrin oder Methylepichlorhydrin mit Dihydroxydiphenylmethan (Bisphenol F) oder Dihydroxydiphenylpropan (Bisphenol A), sowie mit Dihydroxybenzophenon, Dihydroxynaphthalin und/oder Resorcin. Polyepoxide mit geeigneter Molmasse werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein; es können auch Gemische von Epoxidharzen mit unterschiedlicher Struktur und Molmasse eingesetzt werden. Weiterhin kann zum Elastifizieren ein Teil des beschriebenen Polyglycidyläthers durch aliphatische Polyglycidyläther der Formel 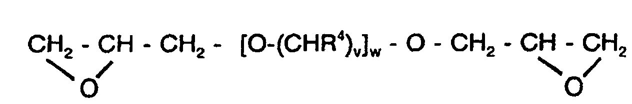 ersetzt werden, wobei
- R⁴: H oder ein niedriger, gegebenenfalls mit verschiedenen Substituenten versehener Alkylrest ist und
- v: Zahlen von 2 bis 6 und
- w: Zahlen von 5 bis 50 bedeuten.

Beispiele sind Glycidyläther von Bisphenol A- und Bisphenol F- Polypropylenglykol- und Polyäthylenglykoläthern (mit verschiedener Molmasse). Die modifizierten Epoxidharze können auch durch Reaktion mit langkettigen Polyalkoholen wie Hexandiol-1,6, Neopentylglykol, bisäthoxyliertes Neopentylglykol, Hydroxypivalinsäure-neopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidyläthern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidyläther unter Vergrößerung der Molmasse eingebaut werden.

Eine ausführliche Aufzählung der geeigneten Epoxidverbindungen findet sich in den Handbüchern "Epoxidverbindungen und Harze" von A.M. Paquin, Springer Verlag Berlin 1958, Kapitel iv und "Handbook of Epoxy Resins" von H.Lee, K. Neville, McGraw-Hill Book Company, New York 1982 Reissue, sowie "Epoxy Resin Chemistry and Technology" von C.A. May, Marcel Dekker Inc., New York and Basel 1988.

Das Epoxidharz kann auch mit gesättigten oder ungesättigten Polycarbonsäuren und/oder Hydroxyalkylcarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure und dimere Fettsäuren. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidyläther mit niedriger Molmasse mit Polycarbonsäuren und/oder Polyalkoholen werden als Zwischenstufe modifizierte Polyglycidyläther erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidyläther von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Auch können Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden verwendet primäre Amine wie Methylamin, Äthylamin, Propylamin, Butylamin, Octylamin, Monoäthanolamin, 2-Äthylhexylamin, Dimethylaminopropylamin, Diäthylaminoäthylamin, Dimethylaminoneopentylamin oder Methoxypropylamin und/oder bevorzugt sekundäre Amine wie Dialkylamine, Monoalkylhydroxyalkylamine oder Dihydroxyalkylamine. Beispiele für solche Verbindungen sind Dimethylamin, Diäthylamin, Dipropylamin, Dibutylamin, Methylbutylamin, Dimethylaminopropylamin, N-Methylaminoäthanol oder Diäthanolamin oder auch cyclische Amine, wie Morpholin oder Oxazolidin. Beim Einsatz der primären Amine reagiert das Amin in Abhängigkeit von den angebotenen stöchiometrischen Verhältnissen mit 1 bis 2 Epoxidgruppen unter Molekülvergrößerung.

Weiterhin können primäre Amine der allgemeinen Formel

H₂N-CR₁R₂-R₃-O(CHR₄-CHR₅O)ₙR₆

oder sekundäre Amine der allgemeinen Formel

H-NR₃-CR₁R₂-R₃-O(CHR₄-CH-R₅O)ₙ-R₃-CR₁R₂-R₃N-H

eingesetzt werden.

In dieser Formel stehen R₁ und R₂ für Wasserstoff, Alkyl- oder -CH₂-OH Gruppen, R₃ steht für einen linearen oder verzweigten Alkylenrest, insbesondere für einen Alkylenrest mit 1 bis 3 Kohlenstoffatomen, R₄ und R₅ stehen für Wasserstoff oder Alkylreste mit 1 bis 4 Kohlenstoffatomen, R₆ steht für Wasserstoff, einen Alkyl-, Cycloalkyl- oder Phenylrest, vorzugsweise für einen Alkylrest mit 1 bis 6 Kohlenstoffatomen und n ist eine ganze Zahl von 0 bis 5. Als Beispiele für solche Monoamine werden genannt: Äthanolamin, Propanolamin, Butanolamin, Äthylenglykol(2-amino-äthyl)äther (H₂N-CH₂-CH₂-O-CH₂-CH₂-OH) und Diäthylenglykolmono(3-aminopropyl)äther (H₂N-(CH₂)₃-O-CH₂-CH₂-O-CH₂-CH₂-OH). Beim Einsatz der primären Amine reagiert das Amin mit der Epoxidgruppe in Abhängigkeit von den angebotenen stöchiometrischen Verhältnissen unter Molekülvergrößerung. Als Beispiel für Diamine werden genannt: Jeffamine® M-Serie, Jeffamine® D-Serie und Jeffamine® ED-Serie.

Weiterhin kommen Di- oder Triamine mit primären und/oder sekundären Aminogruppen in Frage, wie z.B. Laurylpropylendiamin, Talgfettpropylendiamin.

Mit sekundären Diaminen tritt eine Kettenverlängerung ein. Als sekundäre Diamine, bevorzugt langkettige Diamine, werden N,N'-Dialkyldiaminoalkane wie z.B. N,N'-Bis(isohexyl)-1,6-diaminohexan, N,N'-Bis(isohexyl)isophorondiamin, N,N'-Bis(isohexyl)-dimethylhexamethylendiamin, N,N'-Bis(isohexyl)-2-methylpentamethylendiamin, N,N'-Bis(isohexyl)-äthylendiamin und N,N'-Bis(isohexyl)-di-(4-aminocyclohexyl)methan oder Umsetzungsprodukte von gesättigten Glycidyläthern oder -estern oder Epoxyalkanen mit primären Diaminoalkanen verwendet wie das Additionsprodukt von Hexandiamin-1.6 oder 2-Methylpentamethylendiamin mit 2 Mol Glycidylester der Versaticsäure (α-verzweigte Monocarbonsäuren, besonders mit C₉-C₁₁).

Als Monoepoxide können für diesen Zweck auch gesättigte oder ungesättigte Glycidyläther oder α-Epoxide verschiedener Kettenlänge wie 1,2-Dodecenoxid oder Butylenoxid eingesetzt werden. Die geeignete Zahl an Hydroxylgruppen entsteht dabei einmal automatisch aus der Epoxidgruppe bei der Addition der sekundären Aminogruppen, zum anderen kann sie durch Einsatz von Hydroxyalkylaminen gesteuert werden. Weiterhin können als sekundäre Diamine das Umsetzungsprodukt von 2 Mol 2-Äthylhexylamin mit 1 Mol Beckopox® EP 075 (Diglycidyläther auf Basis von Propylenoxid) und/oder 1 Mol Beckopox® EP 140 sowie aliphatische sekundäre Diamine auf Basis von Propylenoxid-Addukten von Diolen oder Triolen, wie z.B. Novamin®-Typen zum Einsatz kommen.

Die Molverhältnisse zwischen Epoxid- und Amino-Gruppenhaltigen Verbindungen sind so zu wählen, daß der vollständige Einbau des Amins gewährleistet ist, weil sonst durchbruchartige Oberflächenstörungen beim elektrophoretischen Beschichten auftreten können, d.h. ein geringfügiger Überschuß an Epoxidgruppen ist vorteilhaft.

Es können alle Amine gleichzeitig mit den Epoxidgruppen umgesetzt oder es kann stufenweise vorgegangen werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen.

Bei der Herstellung des Amino-Epoxid-Harzes geht man vorteilhafterweise so vor, daß man zunächst das Epoxid-Harz in einem Lösungsmittel löst und dann mit den Aminen umsetzt.

Bei einer besonders bevorzugten Herstellungsvariante werden die gelösten Epoxidharze zu einer Mischung aus den entsprechenden Aminen, Bisphenol A und Lösungsmittel dosiert.

Für Vernetzungsreaktionen müssen in dem Amino-Epoxid-Harz stets Hydroxylgruppen vorhanden sein. Die im Molekül vorhandene Hydroxylzahl (gemessen als mg KOH pro Gramm Festharz) ist maßgebend für die Vernetzungsfähigkeit des Films. Sie sollte über 50, vorzugsweise über 100, besonders vorteilhaft über 150 liegen. Die obere Grenze der Hydroxylzahl liegt bei 500, vorteilhafter unter 300. Ist die Hydroxylzahl zu niedrig, so entstehen bei der Vernetzung Filme, die noch in organischen Lösungsmitteln wie Methyläthylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozeß wichtigen primären und/oder sekundären Hydroxylgruppen können anteilsweise durch primäre und/oder sekundäre Aminogruppen ersetzt werden. Das Einführen von primären Aminogruppen in den Harzgrundkörper erfolgt vorzugsweise durch Umsetzen von mindestens ein, bevorzugt mindestens zwei Epoxidgruppen pro Molekül enthaltenden Harzen mit einem amino- und/oder hydroxylgruppenhaltigen Ketimin und/oder Aldimin und/oder Polyamin. Die Ketimine werden nach bekannten Methoden durch Wasserabspaltung aus den entsprechenden Polyaminen der allgemeinen Struktur R-NR-R-NH₂ oder den entsprechenden Aminoalkoholen der allgemeinen Struktur HO-R-NH₂ und den geeigneten aliphatischen Ketonen wie Diäthylketon, Methylisobutylketon, Äthyl-n-propylketon oder auch Cyclopentanon, Cyclohexanon, Acetophenon usw. hergestellt. Bevorzugte Ketimine sind Umsetzungsprodukte aus Methylisobutylketon und Diäthylentriamin. Die Reaktionsbedingungen (Reaktionstemperatur, Auswahl des Lösungsmittels) müssen so geführt werden, daß keine die Ketiminbindung zersetzende Substanzen wie Wasser in dem Reaktionsprodukt vorhanden bleiben.

Das Ketimin schützt die primäre Aminogruppe (vgl. US-A-3,523,925), so daß das Amin über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedermolekulares Amin im Ansatz zurückbleibt, weil sonst durchbruchartige Oberflächenstörungen beim elektrophoretischen Beschichten auftreten können. Die Reaktion der sekundären Aminogruppen des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120 °C zu erhöhen.

Die Härtungsmittel tragen Isocyanatgruppen, die mit den funktionellen Gruppen der Harze unter Verbindungsbildung reagieren. Damit diese Reaktion nicht vorzeitig erfolgt (z.B. während der Lagerung, wenn ein Einkomponentensystem verwendet wird), werden die reaktiven Gruppen des Härtungsmittels zuvor mit solchen Verbindungen umgesetzt, die bei den Einbrenntemperaturen des Beschichtungsmittels von über 110 °C bis unter 210 °C, vorzugsweise unter 190 °C, besonders unter 180 °C leicht wieder abgespalten werden (sog. Verkappungs- oder Blockierungsmittel), wobei die reaktiven Gruppen des Härtungsmittels zurückgebildet werden. Diese reagieren dann mit den funktionellen Gruppen des Harzes unter Bildung einer danach im allgemeinen nicht mehr schmelzbaren und unlöslichen Beschichtung.

Geeignet für die Erfindung sind Härtungsmittel, die Isocyanatgruppen enthalten. Bevorzugt werden blockierte oder verkappte Isocyanate, die nach Abspalten des Verkappungsmittels mit den funktionellen Gruppen des Harzes unter Bildung von Urethanen, Harnstoffen oder Thiourethanen reagieren.

Die erfindungsgemäß solubilisierten verkappten Polyisocyanate (B) werden beispielsweise so hergestellt, daß man ein Polyisocyanat (B1) in Substanz oder Schmelze umsetzt mit einem mehrwertigen Alkohol (B2) und einem Verkappungsmittel (B4), wobei gegebenenfalls basische Katalysatoren wie tert. Amine oder geringe Mengen an Zinnsalzen wie Dibutylzinndilaurat zugegeben werden können. Die Mengen werden so gewählt, daß nicht alle Isocyanatgruppen umgesetzt werden. Die verbliebenen Isocyanatgruppen werden mit einer solubilisierenden Verbindung (B3) umgesetzt, die ausgewählt ist aus der Gruppe der Polyamine mit mindestens einer tertiären und mindestens einer primären oder sekundären Aminogruppe und aus der Gruppe der Amine mit mindestens einer tertiären Aminogruppe und mindestens einer Hydroxy-, primären und sekundären Amino- und/oder Mercapto-Gruppe (B3-k, kationische Solubilisierung), der Hydroxy-, Amino- oder Mercapto-Säuren (B3-a, anionische Solubilisierung) und der organischen Hydroxy-, Amino- oder Mercapto-Verbindungen (B3-n), die ein hydrophiles nichtionisches Strukturelement enthalten. Geeignete hydrophile Strukturelemente sind beispielsweise Polyoxyalkylenpolyäther, wobei Alkylen für 1,2-Äthylen-, für 1,2-Propylen- oder Gemische aus diesen Gruppen steht, mehrere Hydroxygruppen an benachbarten C-Atomen, oder andere hydrophile Gruppen wie beispielsweise Harnstoffgruppen. Im Fall der kationischen Solubilisierung werden die Mengen der Komponenten (B1), (B2), (B3) und (B4) so gewählt, daß sich für (B) eine Aminzahl von 5 bis 40, bevorzugt 10 bis 30, und besonders bevorzugt ungefähr 17 bis 25 mg KOH pro Gramm verkappten Isocyanats ergibt.

Diese solubilisierten verkappten Polyisocyanate werden dann in wäßrige Dispersion überführt, wobei die solubilisierenden Gruppen vor oder während der Dispergierung durch Zusatz von Säuren (im Fall B3-k) oder Alkalien (im Fall B3-a) teilweise oder vollständig in die ionische Form überführt werden.

Für die Erfindung geeignete Polyisocyanate (B1) sind aliphatische, cycloaliphatische und/oder aromatische Polyisocyanate mit mindestens zwei lsocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethandiisocyanat, Diphenyltetraisocyanat, bevorzugt Naphthyltetraisocyanat, Toluylenund Xylylendiisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethandiisocyanat sowie aliphatische Diisocyanate der allgemeinen Formel

O = C = N - (C R₂)ᵣ - N = C = O

worin r eine ganze Zahl von 2 bis 20, insbesondere 6 bis 8 ist und R Wasserstoff oder einen niedrigen Alkylrest mit 1 bis 8 C-Atomen, vorzugsweise 1 oder 2 C-Atomen dargestellt. Beispiele hierfür sind Trimethylendiisocyanat, Tetramethylendiisocyanat, Pentamethylendiisocyanat, Hexamethylendiisocyanat, Propylendiisocyanat, Äthyläthylendiisocyanat, Dimethyläthylendiisocyanat, Methyltrimethylendiisocyanat und Trimethylhexandiisocyanat. Besonders bevorzugt werden Diphenylmethan- und Toluylendiisocyanat, und deren Isomerengemische sowie Isophorondiisocyanat, Dicyclohexylmethan-diisocyanat, Trimethylendiisocyanat, Tetramethylendiisocyanat und Hexamethylendiisocyanat. Vinylpolymerisate, die Isocyanatgruppen enthalten und durch Copolymerisation von z. B. Isocyanatoäthy((meth)acrylat oder Dimethyl-isopropylenbenzylisocyanat mit Alkyl(meth)acrylaten und/oder (Alkyl)vinylbenzolen entstehen, können auch verwendet werden. Ebenso sind gemischte aliphatische/aromatische Isocyanat-Verbindungen geeignet.

Im Fall der kationisch solubilisierten verkappten Polyisocyanate wurde überraschenderweise gefunden, daß sich das erfindungsgemäße Verfahren ohne Gegenwart von Lösungsmitteln nur anwenden läßt, wenn oligomere oder polymere Isocyanate eingesetzt werden. Solche oligomeren oder polymeren Isocyanate sind beispielsweise die dimeren (Uretdione) und trimeren Isocyanate (Cyanurate), die Allophanate und Biurete, die sich aus der Reaktion bereits gebildeter Urethane mit nicht umgesetztem Isocyanat ergeben, und polymere Isocyanate auf Basis des Diphenylmethandiisocyanats. Setzt man in diesem Fall monomere Isocyanate ein, so lassen sich die Reaktionsprodukte nicht in feinteilige Dispersionen überführen. Man erhält vielmehr grobteilige Dispersionen, die rasch vergelen.

Zum Verkappen oder Blockieren der Isocyanate werden übliche Verkappungsmittel (B4) eingesetzt. Verbindungen, die die Isocyanate blockieren, enthalten nur eine freie Amin-, Amid-, Lactam-, Mercapto- oder Hydroxylgruppe. Hierfür haben sich beispielsweise bewährt aliphatische oder cycloaliphatische Alkohole wie Methanol, Äthanol, Propanol, Butanol, Pentanol, Hexanol, 2-Äthylhexanol, 2-Pyridinylcarbinol, Dialkylaminoalkohole wie Dimethylaminoäthanol, Oxime wie Methyläthylketoxime, Lactame wie ε-Caprolactam oder Pyrrolidon-2, Imide wie Phthalimid oder N-Hydroxymaleinimid, Hydroxyalkylester, Malonsäure- oder Acetessigsäureester. Es werden aber auch Mono- oder Oligoalkylenglykolmonoäther, wie β-Hydroxyglykole oder -glykoläther und Glykolamide empfohlen. Besonders bevorzugt sind Äthylenglykol-monobutyläther und Diäthylenglykol-monobutyläther sowie Ketoxime, z.B. die Oxime niedriger aliphatischer Ketone, wie Aceton oder Butanon.

Die mehrwertigen Alkohole (B2) tragen mindestens zwei Hydroxygruppen. Bevorzugt werden Polyoxyalkylendiole, aliphatische und cycloaliphatische Alkohole mit 3 bis 8 Kohlenstoffatomen und mindestens zwei Hydroxylgruppen sowie deren Umsetzungsprodukte mit Äthylenoxid oder Propylenoxid oder deren Mischungen. Beispiele geeigneter Alkohole sind Äthylen- und Propylenglykol, Neopentylglykol, Polyäthylen- und propylenglykole sowie deren Copolymere, Glycerin, Erythrit, Pentaerythrit, Hexantriol, Dipentaerythrit sowie Trimethyloläthan und -propan.

Die kationisch solubilisierenden Verbindungen (B3-k) sind Verbindungen mit mindestens einer tertiären Aminogruppe und mindestens einer funktionellen Gruppe ausgewählt aus Hydroxy-, Mercapto- und primären und sekundären Amino-Gruppen. Besonders bevorzugt sind Polyamine mit 2 bis 10 C-Atomen, die mindestens eine tertiäre und mindestens eine primäre oder sekundäre Aminogruppe enthalten. Die primäre oder sekundäre Aminogruppe reagiert mit einer Isocyanatgruppe unter Bildung einer Harnstoffgruppe. Die tertiäre Aminogruppe kann in dieser Reaktion als Katalysator wirken. Durch Protonieren mit Säuren wird sie in eine quaternäre Ammoniumgruppe umgewandelt und ermöglicht dadurch die emulgatorfreie Dispergierung der Härterkomponente (B).

Geeignete Polyamine sind beispielsweise 3-Dimethylamino-1-propylamin, N,N-Dimethyläthylendiamin, N,N,N'-Trimethyläthylendiamin, N,N'-Bis-(3-aminopropyl)-piperazin, 1-Amino-4-methylpiperazin, N-(2-Aminoäthyl)-piperazin und N-(2-Aminoäthyl)-piperidin. Auch solche Verbindungen sind geeignet, die eine oder mehrere Hydroxygruppen oder eine oder mehrere Mercaptogruppen jeweils gemeinsam mit einer oder mehreren tertiären Aminogruppen tragen. Beispiele sind Triäthanolamin und Captamin. Ebenso sind Verbindungen geeignet, die neben den tertiären Aminogruppen zwei oder mehr unterschiedliche gegenüber Isocyanat reaktive Gruppen ausgewählt aus den Hydroxy-, Mercapto- und primären und sekundären Amino-Gruppen tragen. Beispiele sind 1-Amino-4-(2-hydroxyäthyl)-piperazin, 2-Mercapto-3,4,5,6-tetrahydropyrimidin und 3-Mercapto-1,2,4-triazol. Es lassen sich auch Verbindungen einsetzen, die mindestens eine quaternäre Ammoniumgruppe und mindestens eine gegenüber lsocyanat reaktive Gruppe tragen, beispielsweise Cholin-chlorid (N-2-Hydroxyäfhyl-trimethylammoniumchlorid), wobei das Ansäuern vor, während oder nach dem Dispergierungsschritt entfällt.

Die anionisch solubilisierenden Verbindungen (B3-a) sind Verbindungen, die mindestens eine funktionelle gegenüber Isocyanat reaktive Gruppe ausgewählt aus Hydroxy-, Mercapto- und primären und sekundären Amino-Gruppen, und mindestens eine Säuregruppe enthalten. Die Säuregruppe kann ausgewählt werden aus den Carboxygruppen, den Phosphon- und Phosphinsäuregruppen und den Sulfon- und Sulfinsäuregruppen. Beispiele geeigneter Verbindungen sind Aminosäuren wie Glycin, Alanin, β-Alanin, Cystein, Cysteinsäure, Lysin, Taurin, Serin, Hydroxysäuren wie Glykolsäure, Glycerinsäure, Milchsäure, Isäthionsäure (Hydroxyäthansulfonsäure), Hydroxymethansulfinsäure, 1- und 2-Aminoäthanphosphonsäure. Auch in diesem Fall können die Verbindungen in der Form von Salzen eingesetzt werden, wobei dann der Alkalizusatz entfallen kann.

Die nichtionisch solubilisierenden Verbindungen (B3-n) enthalten mindestens eine funktionelle Gruppe ausgewählt aus Hydroxy-, Mercapto- und primären und sekundären Amino-Gruppen, und mindestens ein hydrophiles Strukturelement, bevorzugt ausgewählt aus der Gruppe der Polyoxyalkylenäther mit 2 oder 3 C-Atomen im Alkylenrest und deren Mischungen. Insbesondere bevorzugt sind Polyoxyalkylendiole und - diamine. Beispiele sind die Polyäthylen- und Polypropylenglykole und deren Monoäther sowie die unter den Handelsnamen ®Jeffamine und ®Novamin bekannten Polyoxyalkylen-amine. Gleichfalls geeignet sind z.B. niedermolekulare Polyäthylenimine, die von BASF unter dem Namen ®Polymin angeboten werden.

Aus den Harzen (A) und den Härtungsmitteln (B) können geeignete Beschichtungsmittel hergestellt werden, indem die Komponenten (A) und (B) in Lösung oder bevorzugt in Substanz oder Schmelze bei Temperaturen unterhalb der Abspaltungstemperatur der Verkappungsmittel gemischt werden. Gegebenenfalls wird das Lösungsmittel dann z.B. durch Destillation oder durch Diffusion entfernt, die Mischung wird erforderlichenfalls durch Zusatz von Säure oder Base in eine hydrophile Form überführt und dann in Wasser dispergiert (Einkomponentensystem).

Im Sinne eines Zweikomponentensystems können das Harz (A) und das Härtungsmittel (B) auch in separate Dispersionen (A') und (B') überführt werden, indem jede der Komponenten für sich durch Zusatz von Säure oder Base hydrophil gestellt und dann in Wasser dispergiert wird. Die Dispersionen können dann unmittelbar oder kurze Zeit vor Gebrauch miteinander gemischt werden.

Die erfindungsgemäßen Dispersionen eignen sich ausgezeichnet als ionisch stabilisierte Bindemittel auf Wasserbasis. Besonders bevorzugt wird die Weiterverarbeitung zu Elektrotauchlacken, indem die wäßrige Bindemitteldispersion mit Pigmenten wie Titandioxid und Ruß und gegebenenfalls Katalysatoren, die beide vorzugsweise über eine wäßrige Pigmentpaste eingearbeitet werden, versetzt wird. Mit den erfindungsgemäßen Beschichtungsmitteln lassen sich auch Einbrennlacke herstellen.

Die Herstellung von Pigmentpasten ist allgemein bekannt und braucht nicht näher erläutert zu werden, vergleiche dazu D.H. Parker, Principles of Surface Coating Technology, Interscience Publishers, New York (1965); R.L. Yates, Electropainting, Robert Draper Ltd., Teddington/England, (1966); H.F. Payne, Organic Coating Technology, Band 2, Wiley and Sons, New York (1961).

Die Erfindung wird durch die nachfolgenden Beispiele näher erläutert.

### Beispiel 1 Härter

Es werden 2 mol Diäthylenglykolmonobutyläther, 5,66 mol Butylglykol und 1,13 mol Trimethylolpropan vorgelegt und bei 80 °C 5,89 mol Desmodur VL® über 4 Stunden zudosiert. Nach Erreichen eines NCO-Wertes von 2,6 % wird 0,75 mol N,N-Dimethylaminopropylamin zugegeben. Dabei steigt die Guttemperatur auf ca. 110 °C an. Nach Abkühlen auf 95 °C werden 0,6 mol Ameisensäure als 50 %ige wäßrige Lösung zugegeben und eingerührt. Anschließend wird mit deionisiertem Wasser dispergiert und auf ein Feststoffgehalt von 55% eingestellt.

### Beispiel 2 Härter

Es werden bei 50 °C 10,2 mol Desmodur VL® vorgelegt und anschließend innerhalb 7 min mit 1 mol ®Voranol P 400 versetzt. Nach 0,5 Stunden bei 60 °C wird eine Mischung aus 11,1 mol Butylglykol und 1,9 mol Trimethylolpropan innerhalb von 0,5 Stunden zudosiert. 10 min. später wird 1,68 mol N,N-Dimethylaminopropylamin zugegeben und eingerührt. Die Mischung erwärmt sich dabei auf 110 °C. Es wird so lange weitergerührt, bis der NCO-Wert 0 % erreicht hat. Nach Abkühlen auf 95 °C werden 1,38 mol Ameisensäure als 50 %ige wäßrige Lösung zugegeben und anschließend mit deionisiertem Wasser auf ein Feststoffgehalt von 50% verdünnt.

### Beispiel 3 Amino-Epoxidharz

In einem Reaktionsgefäß, das mit Rührer, Thermometer, Tropftrichter und Rückflußkühler ausgerüstet ist, werden zu einer Lösung aus 566,4 g Polygycidyläther auf Basis Bisphenol A mit einem Epoxidäquivalentgewicht von 472 g/mol in 322 g Methoxypropanol 52,6 g ®Texanol und 42 g Diäthanolamin bei 40 °C zudosiert. Anschließend werden 20,4 g Dimethylaminopropylamin und 123,2 g eines Adduktes von 116 g 1,6-Diaminohexan mit 500 g Cardura® E 10 (Glycidylester einer in α-Stellung verzweigten Monocarbonsäure mit 9 bis 11 C-Atomen) bei 40 bis 50 ° C zugesetzt und die Lösung langsam auf 90 bis 100 °C aufgeheizt. Zur Vervollständigung der Reaktion hält man die angegebene Temperatur noch 3 Stunden. Der Epoxidgehalt ist dann Null.

| | |
|---|---|
| Aminzahl | 98 (mg KOH/g Festharz) |
| Festkörper-Massengehalt | 70 % |

### Beispiel 4 Bindemittel aus Harz und Härter

In einem Reaktionsgefäß, das mit Rührer, Thermometer, Tropftrichter und Rückflußkühler ausgerüstet ist, wird das auf 90 bis 100 °C erwärmte Amino-Epoxidharz gemäß Beispiel 3 vorgelegt und einer Vakuumdestillation unterworfen. Sobald die gesamte Menge Lösungsmittel abgezogen ist, wird auf 90 bis 95 °C abgekühlt. Diese Mischung wird mit 85 %iger Ameisensäure neutralisiert. Anschließend wird die unten angegebene Menge entmineralisiertes Wasser untergemischt. Nach dieser allgemeinen Vorschrift werden die Dispersionen 1 und 2 erhalten.

**Tabelle 1**

| **Zusammensetzung der Dispersionen** | | |
|---|---|---|
| | Dispersion 1 | Dispersion 2 |
| Amino-Epoxyharz | 766 g | 766 g |
| Härter | 268 g (Beispiel 1) | 268 g (Beispiel 2) |
| Ameisensäure (85%ig) | 11 g | 11 g |
| Wasser | 1482 g | 1865 g |
| Festkörper-Massengehalt (gem. nach 1h, 125 °C) | 35 % | 30 % |

### Beispiel 5

Zu einer Lösung von 204 Teilen (2 mol) N,N-Dimethylaminopropylamin in 1224 Teilen Äthoxypropanol werden bei 60 bis 80 °C während einer Stunde 1708 Teile (4 mol) ®Denacol EX-145 zugesetzt; die Reaktionsmasse wird danach bei 80 bis 100 °C gehalten, bis kein Epoxid mehr nachzuweisen ist (Aminzahl ca. 117 mg KOH/g; Massengehalt Feststoff ca. 50 %).

### Beispiel 6

Zu 348 Teilen Desmodur® T 80 (80 % 2,4-, 20 % 2,6-Toluylendiisocyanat) in 296 Teilen Xylol werden bei 40 bis 60 °C 540 Teile Iso-Octadecylalkohol und 0,9 Teile Dibutylzinndilaurat während einer Stunde zugesetzt, die Reaktionsmasse wird anschließend bis zu einem NCO-Wert von ca. 9,5 % bei dieser Temperatur gehalten (Feststoff-Massengehalt ca. 75 %).

### Beispiel 7

1280 Teile (2 Äquivalente Epoxid) Beckopox® SEP 311 (75 %ig in Xylol) werden auf 80 °C erwärmt. Zu dieser Lösung werden während einer Stunde 1184 Teile des Urethans nach Beispiel 6 (75 %ig) zugesetzt, die Reaktionsmasse wird bei 80 °C gehalten, bis kein freies Isocyanat mehr nachweisbar ist. Anschließend wird das Lösungsmittel unter Vakuum abdestilliert. Mit 1232 Teilen Äthoxypropanol wird auf ca. 60 % verdünnt.

### Beispiel 8 Pastenharz

Zu der Lösung von Beispiel 6 werden 2460 Teile des in Beispiel 7 hergestellten Addukts eingetragen und diese Mischung bei 60 bis 80 °C solange gehalten, bis die Säurezahl und der Epoxidgehalt auf Null gefallen sind. Anschließend wird das Lösungsmittel im Vakuum entfernt, danach werden 128 Teile Butylglykol und 400 Teile Milchsäure (90 %) zugesetzt. Die Dispergierung erfolgt durch kontinuierliche Zugabe von 2250 Teilen vollentsalzten Wassers, so daß sich ein Festkörpermassengehalt von 55 % einstellt.

### Beispiel 9 Pigmentpaste

In einem mit einem Rührer ausgestatteten Gefäß werden 14 Teile Bindemittel nach Beispiel 8, 3 Teile Texanol, 1 Teil Essigsäure (50 %ig) und 2 Teile einer 1:1-Mischung von 2,4,7,9-Tetramethyl-5-decin-4,7-diol (Surlynol® 104, Netzmittel), und Sektol® vorgelegt. Zu dieser Mischung werden unter Rühren 3,5 Teile Dibutylzinnoxid, 0,3 Teile Ruß, 38 Teile Titandioxid, 0,6 Teile ®Aerosil und 38 Teile vollentsalztes Wasser zudosiert. Nach einstündigem Rühren wird die Pigmentpastenmischung unter Kühlung auf einer Perlmühle 1 Stunde vermahlen (SAZ-Perlen: 0.1 mm).

### Beispiel 10 KTL-Lacke Lack 1 und Lack 2

In einem mit Rührer ausgestatteten Becherglas werden jeweils 1270 Teile der Bindemitteldispersion (Dispersion 1 und 2) vorgelegt, mit 2400 Teilen vollentsalzten Wassers verdünnt. Anschließend setzt man jeweils 420 Teile der im Beispiel 9 hergestellten Pigmentpaste zu.

### Beispiel 11 Abscheideergebnisse:

Auf als Kathode geschalteten Eisenblankblechen wurde bei 225 V 2,5 Minuten bei einer Badtemperatur von 32 °C beschichtet, mit Wasser abgespült und 30 Minuten bei 170 °C eingebrannt. Die eingebrannten Filme zeigten eine Trockenfilmstärke von 20 µm und keine Krater.

Die anwendungstechnischen Ergebnisse der bleifrei formulierten KTL-Lacke sind in Tabelle 2 zusammengefaßt:

**Tabelle 2**

| **Prüfergebnisse KTL-Lacke:** | | | | | |
|---|---|---|---|---|---|
| Lack | Erichsen Tiefung (mm) | Acetontest Beständigkeit | Schlagprüfung (in·lb) | Salzsprühtest (240 h) | Siebrückstand (3 Wochen) |
| 1 | 7,5 | > 1 min | > 80 | < 1,5 mm | < 50 mg/l |
| 2 | 7,8 | > 1 min | " | " | " |

## Patentansprüche

1. Wäßriges Beschichtungsmittel enthaltend
(A') eine wäßrige Dispersion eines Epoxid-Amin-Addukts (A) mit gegenüber Isocyanat reaktiven funktionellen Gruppen, und
(B') eine wäßrige lösungsmittelfreie Dispersion eines solubilisierten verkappten Isocyanats (B), wobei zu dessen Herstellung eine solubilisierende Verbindung eingesetzt wird, ausgewählt aus der Gruppe (B3-k) der Polyamine mit mindestens einer tertiären und mindestens einer primären oder sekundären Aminogruppe und der Amine mit mindestens einer tertiären und mindestens einer Hydroxy-, primären oder sekundären Amino- und/oder Mercaptogruppe, der Gruppe (B3-a) der Hydroxy-, Mercapto- und Aminosäuren und der Gruppe (B3-n) der organischen Hydroxy-, Mercapto- und Amino-Verbindungen, die ein hydrophiles nichtionisches Strukturelement enthalten, mit der Maßgabe, daß im Fall einer kationischen Solubilisierung des lsocyanats zu dessen Herstellung eines polymeres oder oligomeres Polyisocyanat eingesetzt wird.

2. Beschichtungsmittel nach Anspruch 1, **dadurch gekennzeichnet, daß** das Harz (A) funktionelle Gruppen ausgewählt aus Hydroxy-, Amino- und MercaptoGruppen jeweils ausschließlich oder in Mischung untereinander enthält.

3. Beschichtungsmittel nach Anspruch 1, **dadurch gekennzeichnet, daß** das verkappte Isocyanat (B) kationisch solubilisiert ist und erhältlich ist durch Umsetzen von
(B1) einem polymeren oder oligomeren Polyisocyanat,
(B2) einem mehrwertigen Alkohol,
(B3) einer Verbindung (B3-k) mit mindestens einer tertiären Aminogruppe und mindestens einer funktionellen Gruppe ausgewählt aus Hydroxy-, Mercapto- und primären und sekundären Amino-Gruppen, und
(B4) einer Verbindung mit mindestens einem aktiven Wasserstoffatom, die bei Einbrenntemperaturen abgespalten wird,
wobei die Mengen von (B1), (B2), (B3) und (B4) so gewählt werden, daß eine Aminzahl des Produkts (B) von 5 bis 40 mg KOH / g Festharz erreicht wird.

4. Beschichtungsmittel nach Anspruch 1, **dadurch gekennzeichnet, daß** das verkappte Isocyanat (B) anionisch solubilisiert ist und erhältlich ist durch Umsetzen von
(B1) einem Polyisocyanat,
(B2) einem mehrwertigen Alkohol,
(B3) einer Verbindung (B3-a), die mindestens eine funktionelle Gruppe ausgewählt aus Hydroxy-, Mercapto- und primären und sekundären Amino-Gruppen, und mindestens eine Säuregruppe enthält, und
(B4) einer Verbindung mit mindestens einem aktiven Wasserstoffatom, die bei Einbrenntemperaturen abgespalten wird.

5. Beschichtungsmittel nach Anspruch 1, **dadurch gekennzeichnet, daß** das verkappte lsocyanat (B) nichtionisch solubilisiert ist und erhältlich ist durch Umsetzen von
(B1) einem Polyisocyanat,
(B2) einem mehrwertigen Alkohol,
(B3) einer Verbindung (B3-n), die mindestens eine funktionelle Gruppe ausgewählt aus Hydroxy-, Mercapto- und primären und sekundären Amino-Gruppen, und mindestens ein hydrophiles Strukturelement enthält, ausgewählt aus der Gruppe der Polyoxyalkylenäther mit 2 oder 3 C-Atomen im Alkylenrest und deren Mischungen, und
(B4) einer Verbindung mit mindestens einem aktiven Wasserstoffatom, die bei Einbrenntemperaturen abgespalten wird.

6. Beschichtungsmittel nach Anspruch 3, 4 oder 5, **dadurch gekennzeichnet, daß** zur Herstellung des verkappten Isocyanats (B) zunächst das Polyisocyanat (B1) mit einem molaren Unterschuß der Verbindungen (B2) und (B4) gleichzeitig oder nacheinander in Substanz oder Schmelze umgesetzt wird, danach die Verbindung (B3) in einer solchen Menge zugegeben wird, daß keine freien Isocyanatgruppen mehr vorhanden sind und daß ohne Zusatz von Emulgatoren eine stabile Dispersion in Wasser erhalten werden kann.

7. Beschichtungsmittel nach Anspruch 3, **dadurch gekennzeichnet, daß** das verkappte Isocyanat (B) durch Zusatz einer organischen oder anorganischen Säure völlig oder teilweise protonisiert und dann in Wasser dispergiert wird.

8. Beschichtungsmittel nach Anspruch 4, **dadurch gekennzeichnet, daß** das verkappte Isocyanat (B) durch Zusatz einer organischen oder anorganischen Base völlig oder teilweise ionisiert und dann in Wasser dispergiert wird.

9. Beschichtungsmittel nach Anspruch 1, **dadurch gekennzeichnet, daß** zur Herstellung der Komponente (B) ein Polyisocyanat (B1) ausgewählt wird aus den polymeren und oligomeren aromatischen Polyisocyanaten.

10. Beschichtungsmittel nach Anspruch 3, **dadurch gekennzeichnet, daß** zur Herstellung der Komponente (B) ein polymeres oder oligomeres Isocyanat (B1) ausgewählt wird aus der Gruppe der polymeren und oligomeren Diisocyanate von Diphenylmethan, 2,2-Diphenylpropan und 1,1-Diphenyläthan sowie der dimeren und trimeren Isocyanate, Biurete, Allophanate und Cyanurate.

11. Beschichtungsmittel nach Anspruch 3, 4 oder 5, **dadurch gekennzeichnet, daß** der mehrwertige Alkohol (B2) ausgewählt ist aus der Gruppe der Polyoxyalkylen-diole, der aliphatischen und cycloaliphatischen Alkohole mit 3 bis 8 Kohlenstoffatomen und mindestens zwei Hydroxylgruppen sowie deren Umsetzungsprodukte mit Äthylenoxid und Propylenoxid und deren Mischungen.

12. Beschichtungsmittel nach Anspruch 3, **dadurch gekennzeichnet, daß** die Verbindung (B3) ein aliphatisches Polyamin ist mit einer tertiären und mindestens einer sekundären oder primären Aminogruppe und mit 2 bis 10 C-Atomen.

13. Beschichtungsmittel nach Anspruch 4, **dadurch gekennzeichnet, daß** die Verbindung (B3) ausgewählt ist aus der Gruppe der Carbonsäuren und der organischen Sulfon-, Sulfin- Phosphon- und Phosphinsäuren mit jeweils einer oder mehreren gegenüber Isocyanat reaktiven Gruppen ausgewählt aus den Hydroxy-, Amino- und Mercaptogruppen.

14. Beschichtungsmittet nach Anspruch 5, **dadurch gekennzeichnet, daß** die Verbindung (B3) ein Polyoxyalkylen-diol oder -diamin ist.

15. Beschichtungsmittel nach Anspruch 3, 4 oder 5, **dadurch gekennzeichnet, daß** die Verbindung (B4) ein Verkappungsmittel ist ausgewählt aus der Gruppe der aliphatischen und cycloaliphatischen Alkohole, der Mono- und Oligoalkylenglykolmonoäther, der Lactame, der Imide und der Ketoxime.

16. Beschichtungsmittel nach Anspruch 1, herstellbar durch Mischen der Dispersionen von Harz (A') und Härter (B') unmittelbar vor Gebrauch.

17. Beschichtungsmittel nach Anspruch 1, herstellbar durch Mischen der Komponenten Harz (A) und Härter (B) in Lösung oder Schmelze, gegebenenfalls Entfernen des Lösungsmittels, Zugabe eines lonisierungsmittels und gemeinsames Dispergieren der Mischung beider Komponenten in Wasser.

18. Verwendung eines Beschichtungsmittels nach Anspruch 1 zur Beschichtung von Gegenständen nach dem Verfahren der Einbrennlackierung.

19. Verwendung eines Beschichtungsmittels nach Anspruch 1 zur Beschichtung von elektrisch leitenden Gegenständen nach dem Verfahren der elektrophoretischen Tauchlackierung.

## Claims

1. An aqueous coating composition comprising
(A') an aqueous dispersion of an epoxide/amine adduct (A) having functional groups which are reactive toward isocyanate, and
(B') an aqueous, solvent-free dispersion of a solubilized masked isocyanate (B), prepared using a solubilizing compound selected from the group (B3-k) consisting of polyamines containing at least one tertiary and at least one primary or secondary amino group and from amines containing at least one tertiary and at least one hydroxyl, primary or secondary amino and/or mercapto group, and from the group (B3-a) of hydroxy, mercapto and amino acids, and from the group (B3-n) of organic hydroxy, mercapto and amino compounds containing a hydrophilic nonionic structural element, with the proviso that, in the case of cationic solubilization of the isocyanate, a polymeric or oligomeric polyisocyanate is employed for the preparation of said isocyanate.

2. A coating composition as claimed in claim 1, wherein the resin (A) contains functional groups selected from among hydroxyl, amino and mercapto groups, in each case exclusively or as a mixture with one another.

3. A coating composition as claimed in claim 1, wherein the masked isocyanate (B) is cationically solubilized and is obtainable by reacting
(B1) a polymeric or oligomeric polyisocyanate,
(B2) a polyhydric alcohol,
(B3) a compound (B3-c) containing at least one tertiary amino group and at least one functional group selected from among hydroxyl, mercapto and primary and secondary amino groups, and
(B4) a compound which contains at least one active hydrogen atom and which is eliminated at baking temperatures,
the quantities of (B1), (B2), (B3) and (B4) being selected such that the amine number of the product (B) is from 5 to 40 mg of KOH/g of solid resin.

4. A coating composition as claimed in claim 1, wherein the masked isocyanate (B) is anionically solubilized and is obtainable by reacting
(B1) a polyisocyanate,
(B2) a polyhydric alcohol,
(B3) a compound (B3-a) which contains at least one functional group selected from among hydroxyl, mercapto and primary and secondary amino groups, and at least one acid group, and
(B4) a compound which contains at least one active hydrogen atom and which is eliminated at baking temperatures.

5. A coating composition as claimed in claim 1, wherein the masked isocyanate (B) is nonionically solubilized and is obtainable by reacting
(B1) a polyisocyanate,
(B2) a polyhydric alcohol,
(B3) a compound (B3-n) which contains at least one functional group selected from among hydroxyl, mercapto and primary and secondary amino groups, and at least one hydrophilic structural element selected from the group consisting of polyoxyalkylene ethers having 2 or 3 carbon atoms in the alkylene radical and mixtures thereof, and
(B4) a compound which contains at least one active hydrogen atom and which is eliminated at baking temperatures.

6. A coating composition as claimed in claim 3, 4 or 5, wherein in order to prepare the masked isocyanate (B) the polyisocyanate (B1) is first of all reacted, simultaneously or in succession in bulk or in the melt, with a less than equimolar quantity of the compounds (B2) and (B4), and the compound (B3) is then added in a quantity such that free isocyanate groups are no longer present and that a stable dispersion can be obtained in water without the addition of emulsifiers.

7. A coating composition as claimed in claim 3, wherein the masked isocyanate (B) is completely or partially protonated by addition of an organic or inorganic acid and is then dispersed in water.

8. A coating composition as claimed in claim 4, wherein the masked isocyanate (B) is completely or partially ionized by addition of an organic or inorganic base and is then dispersed in water.

9. A coating composition as claimed in claim 1, wherein the polyisocyanate (B1) used to prepare component (B) is selected from among polymeric and oligomeric aromatic polyisocyanates.

10. A coating composition as claimed in claim 3, wherein the polymeric or oligomeric isocyanate (B1) used to prepare component (B) is selected from the group consisting of polymeric and oligomeric diisocyanates of diphenylmethane, 2,2-diphenylpropane and 1,1-diphenylethane and dimeric and trimeric isocyanates, biurets, allophanates and cyanurates.

11. A coating composition as claimed in claim 3, 4 or 5, wherein the polyhydric alcohol (B2) is selected from the group consisting of polyoxyalkylenediols, aliphatic and cycloaliphatic alcohols having 3 to 8 carbon atoms and at least two hydroxyl groups, and reaction products thereof with ethylene oxide and propylene oxide, and mixtures thereof.

12. A coating composition as claimed in claim 3, wherein the compound (B3) is an aliphatic polyamine containing a tertiary and at least one secondary or primary amino group and having 2 to 10 carbon atoms.

13. A coating composition as claimed in claim 4, wherein the compound (B3) is selected from the group consisting of carboxylic acids and of organic sulfonic, sulfinic, phosphonic and phosphinic acids having in each case one or more isocyanate-reactive groups selected from among hydroxyl, amino and mercapto groups.

14. A coating composition as claimed in claim 5, wherein the compound (B3) is a polyoxyalkylenediol or a polyalkylenediamine.

15. A coating composition as claimed in claim 3, 4 or 5, wherein the compound (B4) is a masking agent selected from the group consisting of aliphatic and cycloaliphatic alcohols, mono- and oligoalkylene glycol monoethers, lactams, imides and ketoximes.

16. A coating composition as claimed in claim 1, which can be prepared by mixing the dispersions of resin (A') and curing agent (B') immediately before use.

17. A coating composition as claimed in claim 1, which can be prepared by mixing the resin component (A) and curing component (B) in solution or in the melt, removing the solvent if desired, adding an ionizing agent and conjointly dispersing the mixture of the two components in water.

18. A method of using a coating composition as claimed in claim 1 for coating articles by the baking method.

19. A method of using a coating composition as claimed in claim 1 for coating electrically conducting articles by the method of electrophoretic deposition.

## Revendications

1. Revêtement aqueux contenant
(A') une dispersion aqueuse d'un adduit époxyde-amine (A) avec des groupes fonctionnels réactifs sur l'isocyanate, et
(B') une dispersion aqueuse sans solvant d'un isocyanate coiffé solubilisé (B), en utilisant pour sa préparation un composé solubilisant pris dans le groupe (B3-k) des polyamines présentant au moins un groupe amino tertiaire et au moins un groupe amino primaire ou secondaire et des amines présentant au moins un groupe hydroxy, un groupe amino primaire ou secondaire et/ou mercapto, dans le groupe (B3-a) des hydroxyacides, des mercaptoacides et des acides aminés et dans le groupe (B3-n) des composés organiques hydroxylés, mercapto et aminés, qui contiennent un élément de structure hydrophile non ionique à condition que dans le cas d'une solubilisation cationique de l'isocyanate, on utilisera pour sa préparation un polyisocyanate polymère ou oligomère.

2. Revêtement selon la revendication 1, **caractérisé en ce que** la résine (A) contient des groupes fonctionnels pris parmi les groupes hydroxy, amino et mercapto chaque fois exclusivement ou en mélange entre eux.

3. Revêtement selon la revendication 1, **caractérisé en ce que** l'isocyanate coiffé (B) est solubilisé par voie cationique et on peut l'obtenir par réaction de
(B1) un polyisocyanate polymère ou oligomère,
(B2) un alcool multifonctionnel,
(B3) un composé (B3-k) présentant au moins un groupe amino tertiaire et au moins un groupe fonctionnel pris parmi les groupes hydroxy, mercapto et amino primaire et secondaire, et
(B4) un composé présentant au moins un atome d'hydrogène actif, qui se dissocie au cours du séchage au four à hautes températures,
les quantités de (B1), (B2), (B3) et (B4) étant choisies de façon telle qu'on obtienne un indice d'amine du produit (B) de 5 à 40 mg KOH/g de résine solide.

4. Revêtement selon la revendication 1, **caractérisé en ce que** l'isocyanate coiffé (B) est solubilisé par voie anionique et qu'on peut l'obtenir par réaction de
(B1) un polyisocyanate,
(B2) un alcool multifonctionnel,
(B3) un composé (B3-a), qui présente au moins un groupe fonctionnel pris parmi les groupes hydroxy, mercapto et amino primaire et secondaire, et au moins un groupe acide, et
(B4) un composé présentant au moins un atome d'hydrogène actif, qui se dissocie à des températures de séchage.

5. Revêtement selon la revendication 1, **caractérisé en ce que** l'isocyanate coiffé (B) est solubilisé par voie non ionique et qu'on peut l'obtenir par réaction de
(B1) un polyisocyanate,
(B2) un alcool multifonctionnel,
(B3) un composé (B3-n), qui contient au moins un groupe fonctionnel pris parmi les groupes hydroxy, mercapto et amino primaire et secondaire, et au moins un élément de structure hydrophile, pris dans le groupe des éthers polyoxyalkyléniques présentant 2 à 3 atomes de carbone dans le reste alkylène et leurs mélanges, et
(B4) un composé présentant au moins un atome d'hydrogène actif, qui se sépare à des températures de séchage.

6. Revêtement selon la revendication 3, 4 ou 5, **caractérisé en ce que**, pour la préparation de l'isocyanate coiffé (B), on fait réagir d'abord le polyisocyanate (B1) sur un quantité insuffisante molaire en composés (B2) et (B4) simultanément ou successivement, sans solvant ou à l'état fondu, ensuite on ajoute le composé (B3) dans une quantité telle qu'il n'y ait plus de groupes isocyanato libres présents et qu'on obtienne une dispersion stable dans l'eau sans ajout d'émulsionnants.

7. Revêtement selon la revendication 3, **caractérisé en ce que** l'isocyanate coiffé (B) est entièrement ou partiellement protonisé par ajout d'un acide organique ou inorganique et ensuite dispersé dans l'eau.

8. Revêtement selon la revendication 4, **caractérisé en ce que** l'isocyanate coiffé (B) est entièrement ou partiellement ionisé par ajout d'une base organique ou inorganique, et ensuite dispersé dans l'eau.

9. Revêtement selon la revendication 1, **caractérisé en ce qu'**on choisit pour la préparation du composant (B) un polyisocyanate (B1) parmi les polyisocyanates polymères et oligomères aromatiques.

10. Revêtement selon la revendication 3, **caractérisé en ce que**, pour la préparation du composant (B), on choisit un isocyanate polymère ou oligomère (B1) pris dans le groupe des diisocyanates polymères et oligomères pris dans le groupe comprenant le diphénylméthane, le 2,2-diphénylpropane et le 1,1-diphényléthane, ainsi que des cyanurates, allophanates, biurets et isocyanates dimères et trimères.

11. Revêtement selon la revendication 3, 4 ou 5, **caractérisé en ce que** l'alcool multifonctionnel (B2) est pris dans le groupe comprenant des polyoxyalkylènediols, des alcools aliphatiques et cycloaliphatiques présentant 3 à 8 atomes de carbone et au moins deux groupes hydroxyle, ainsi que leurs produits réactionnels avec l'oxyde d'éthylène et l'oxyde de propylène et leurs mélanges.

12. Revêtement selon la revendication 3, **caractérisé en ce que** le composé (B3) est une polyamine aliphatique avec un groupe amino tertiaire et au moins un groupe amino secondaire ou primaire et présentant 2 à 10 atomes de carbone.

13. Revêtement selon la revendication 4, **caractérisé en ce que** le composé (B3) est pris dans le groupe des acides carboxyliques et des acides organiques sulfoniques, sulfiniques, phosphoniques et phosphiniques avec chaque fois un ou plusieurs groupes réactifs sur l'isocyanate pris parmi les groupes hydroxy, amino et mercapto.

14. Revêtement selon la revendication 5, **caractérisé en ce que** le composé (B3) est un polyoxyalkylènediol ou une polyoxyalkylènediamine.

15. Revêtement selon la revendication 3, 4 ou 5, **caractérisé en ce que** le composé (B4) est un agent de coiffage pris dans le groupe des alcools aliphatiques et cycloaliphatiques, des monoéthers de mono- et d'oligoalkylèneglycols, des lactames, des imides et des cétoximes.

16. Revêtement selon la revendication 1, que l'on peut préparer par mélange des dispersions de résine (A') et de durcisseur (B') directement avant l'utilisation.

17. Revêtement selon la revendication 1, que l'on peut préparer par mélange des composants résine (A) et durcisseur (B) en solution ou à l'état fondu, éventuellement par élimination du solvant, par ajout d'un agent d'ionisation et par mise en dispersion commune du mélange des deux composants dans l'eau.

18. Utilisation d'un agent de revêtement selon la revendication 1, pour le revêtement d'objets selon le procédé de laquage par séchage au four.

19. Utilisation d'un agent de revêtement selon la revendication 1 pour le revêtement d'objets électroconducteurs selon le procédé de laquage électrophorétique par trempage.
